Europäisches Patentamt

European Patent Office

Office européen des brevets

(19)

(11) Publication number: **0 109 992**
**B1**

(12) **EUROPEAN PATENT SPECIFICATION**

(45) Date of publication of patent specification: **07.01.88**

(21) Application number: **82306375.5**

(22) Date of filing: **01.12.82**

(51) Int. Cl.⁴: **G 01 L 9/00**, G 01 L 9/06,
H 01 L 29/84

(54) Semiconductor pressure transducer.

(43) Date of publication of application:
**13.06.84 Bulletin 84/24**

(45) Publication of the grant of the patent:
**07.01.88 Bulletin 88/01**

(84) Designated Contracting States:
**DE FR GB IT**

(56) References cited:
US-A-4 065 971

"Ullmanns Encyklopädia der technischen
Chemie", 4. Auflage, 1978, Band 15, Verlag
Chemie, Weinheim, New York, Pages 81,84

(73) Proprietor: **HONEYWELL INC.**
**Honeywell Plaza**
**Minneapolis Minnesota 55408 (US)**

(72) Inventor: **Starr, James B.**
**1499 Hythe Street**
**St. Paul Minnesota 55108 (US)**

(74) Representative: **Frohwitter, Bernhard, Dipl.-Ing.**
**et al**
**Bardehle-Pagenberg-Dost-Altenburg & Partner**
**Patent- und Rechtsanwälte Galileiplatz 1**
**Postfach 86 06 20**
**8000 München 80 (DE)**

Courier Press, Leamington Spa, England.

# Description

This invention relates to semiconductor pressure transducers. Such devices known in the prior art employ a diaphragm responsive to the pressure differential across the two surfaces thereof. The diaphragm is formed of a single crystal semiconductor chip having stress sensors disposed on the surface thereof. Stress sensors which are widely used for this purpose exhibit a piezoresistive characteristic, whereby the resistance of the sensor varies with the stress experienced by the sensor as the stress in the chip changes with the differential pressure. A circular cavity is formed in the other surface of the chip to form the diaphragm, and a cylindrical tube has one end thereof bonded to such other surface to surround the cavity.

Normally, at least one pair of radial stress sensors and one pair of circumferential stress sensors are disposed on the surface of the chip.

Originally, circular chips having circular diaphragms were employed, whereby the entire transducer was symmetrical with respect to the common axis of the tube, the cavity, and the chip.

More recently, however, square semiconductor chips have come to be employed, as disclosed, for example, in US patent 4,065,971, because a plurality of such square chips can be readily obtained by the dicing of a crystal wafer of slice. However, such a square chip no longer exhibits symmetry with respect to the axis of the cylindrical tube bonded to it.

The absence of axial symmetry and differences of material between the tube and chip in this type of prior art semiconductor pressure transducer result in false or spurious signals, termed "zero shift" signals, that means signals that change as a result of some influence that occurs at zero pressure differential across the transducer diaphragm. Because of this zero shift phenomemon in the semiconductor pressure transducer of the prior art, electronic signal compensation in the bridge circuit is necessary for the measurement of differential pressures where high accuracy is required.

With the embodiment disclosed in US patent 4,065,971 an attempt is made to enhance the strain-resistance transduction sensitivity in dependence upon the orientation of the radial stress sensors vs. the circumferential stress sensors. For this purpose, in the (110) surface of the silicon chip, one pair of sensors were disposed in the $\{\bar{1}1\bar{1}\}$ and $\{11\bar{1}\}$ directions while the other two sensors were formed in the $\{1\bar{1}\bar{1}\}$ and $\{\bar{1}11\}$ axial directions which do not intersect orthogonally. This embodiment however, does not compensate for the above mentioned zero shift phenomenon.

Accordingly, it is an aim of the present invention to provide an improved semiconductor pressure transducer, in particular, aiming at eliminating the zero shift phenomenon.

In accordance with the present invention there is provided a semiconductor pressure transducer comprising a single crystal semiconductor chip wherein said chip has substantially rectilinear edges and a circular cavity formed in one surface of said chip to provide a diaphragm region, first and second pairs of sensors disposed circumferentially within the diaphragm region on the other surface of said chip and having a piezoresistive characteristic whereby the resistance of the sensors changes in response to stresses induced in the chip, said first pair of sensing substantially radial stresses in said chip and said second pair sensing substantially circumferential stresses in said chip. According to the invention, the transducer is characterized in that said chip has its {110} crystal direction at an oblique angle in the range of 15° to 30° to the one edge of the chip, and in that said circumferential pairs of sensors are disposed symmetrical with two orthogonal axes passing through the center of said chip, the one of said orthogonal axes being oriented parallel to the said {110} crystal direction.

An embodiment of the present invention will now be described, by way of example, with reference to the accompanying drawings, in which:

Figure 1 is a schematic top view of a prior art transducer;

Figure 2 shows curves of the differences between radial and circumferential stresses, for different models of semiconductor pressure transducers comprising a square chip, as a function of the angle between the sensor orientation and the edges of the chip, for zero pressure differential across the chip;

Figure 3 is a top view of an embodiment of pressure transducer of the present invention; and

Figure 4 is a sectional view taken on line IV—IV of Figure 3.

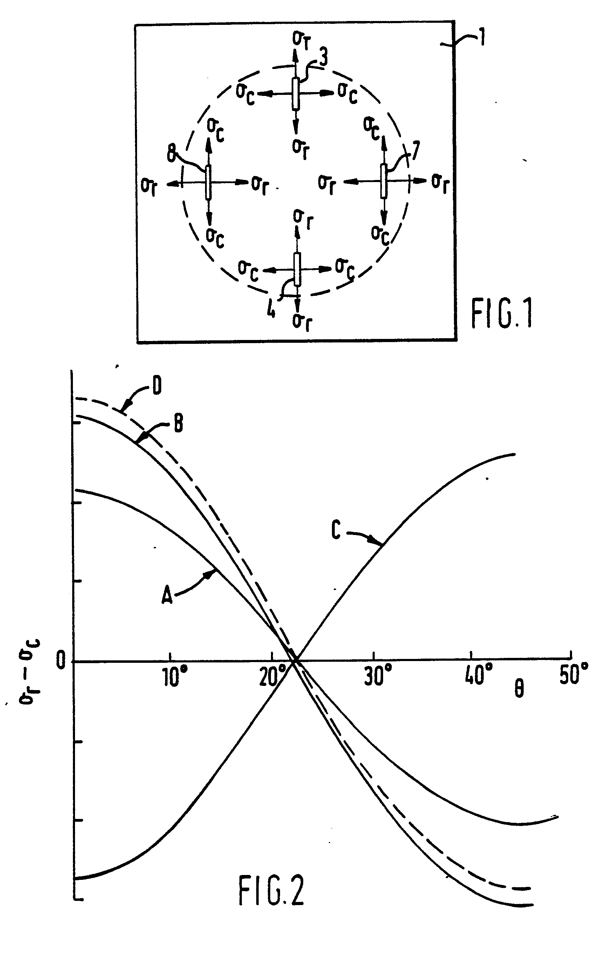

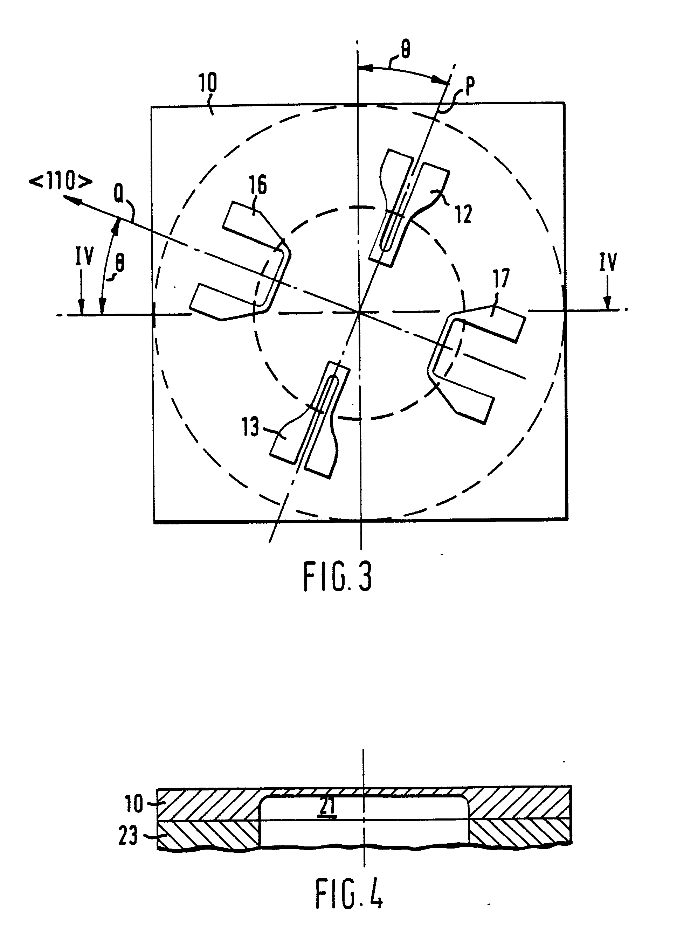

The prior art semiconductor pressure transducer shown schematically in Figure 1 comprises a thin square semiconductor chip 1. Chip 1 is comprised of a single crystal semiconductor material, such as silicon. Radial stress sensors 3 and 4 are disposed on an outer surface of chip 1. Circumferential stress sensors 7 and 8 are also disposed on that outer surface. Sensors 3, 4, 7 and 8 are formed integrally with chip 1 by injecting, such as by diffusion, an impurity, such as boron, into the surface of chip 1 in surface regions defined according to the desired shapes of the sensors. Such a sensor exhibits a piezoresistive characteristic; i.e., its resistance changes with the stress experienced by the sensor.

A circular cavity, shown by the dashed lines in Figure 1, is formed in a second surface of chip 1 opposite that of the outer surface. A cylindrical tube, not shown, is bonded to the second surface and, generally, surrounds the cavity therein. The tube functions to communicate the pressure to be sensed to the cavity, whereby the portion of chip 1 overlying the cavity forms a diaphragm in which the stresses induced therein depend on the difference between the pressure communicated by the tube and the pressure on the first surface.

In Figure 1, the sensors are shown in the form of strips. In practice a particular sensor may be formed of a plurality of parallel strips connected in series. In the prior art, these sensors are oriented in correspondence to the cylindrical coordinates of the cavity or pressure-communicating tube. Thus, sensors 3 and 4 of Figure 1 are disposed with their lengths oriented along a radial direction of the cylindrical coordinates. Sensors 7 and 8, shown disposed parallel to sensors 3 and 4, have their lengths oriented along a circumferential direction of the cylindrical coordinates and are symmetrically disposed about a radial direction of the coordinates.

The stresses induced in chip 1 are sensed by the stress sensors, whose resistance varies correspondingly. Such stresses are generally described by reference to the axes of the sensors. Vectors representing the direction of stresses are shown as arrows in Figure 1. The amplitude of stresses represented by the vectors is denoted by the symbol and is expressed in units of dynes/cm$^2$ (1 dyn/cm$^2$=10$^{-1}$ Pa). Accordingly, the stresses induced along the lengths of radially oriented sensors 3 and 4 are termed radial stresses, $\sigma_r$, whereas the stresses induced transverse to sensors 3 and 4 are termed circumferential stresses, $\sigma_c$ (sometimes termed tangential stresses). Correspondingly, the stresses induced along the lengths of the circumferentially oriented sensors 7 and 8 are termed circumferential stresses, $\sigma_c$ and those induced transverse to sensors 7 and 8 are termed radial stresses, $\sigma_r$.

The zero shift as measured by the output signal generated when the four sensors 3, 4, 7 and 8 are connected in the form of a constant current Wheatstone bridge, is given by:

$$e \simeq 1/2 i_B R\pi_{44}(\sigma_r - \sigma_c)$$

where $i_B$ is the current applied to the bridge;

the product $R\pi_{44}$ is a function that varies only with the temperature of the transducer; and

$\sigma_r$ and $\sigma_c$ are respectively the radial and circumferential stresses induced in the sensors.

For transducers which possess perfect axial symmetry, it can be shown that no zero shift signals will be generated even though the chip and tube are of different materials. In such instance, stresses generated at the surface of the chip diaphragm will be uniform and independent of direction, so that no bridge output signal will be generated. However, when the transducer chip is square instead of round, and is bonded to a cylindrical tube, there is a lack of axial symmetry in the structure.

Equation (1) above illustrates that the differences between the radial and circumferential stresses directly affect the zero shift signal. Moreover, where there is such a difference, a change in temperature (affecting $R\pi_{44}$) also contributes to the zero shift signal. However, equation (1) also illustrates that the zero shift can be minimized, or even eliminated, by making $\sigma_r$ and $\sigma_c$ equal.

In the prior art transducers, the sensors have been oriented either parallel or perpendicular to the edges of the chip, as shown in Figure 1. Generally for such an orientation and placement of the sensors, the stresses $\sigma_r$ and $\sigma_c$ are not equal.

To obviate this problem of such prior art transducers, we have observed by experimental analysis, the variations of the differences between $\sigma_r$ and $\sigma_c$ for particular dimensions of the transducer as the orientation of the sensors were changed. The results of this analysis, for different dimensions of transducers, each having a silicon chip and a Pyrex tube, is shown in Figure 2. For each construction of transducer analyzed, the difference between the radial and circumferential stresses ($\sigma_r - \sigma_c$) was plotted as the radial and circumferential stress sensors were rotated through angle ($\theta$) with respect to the edges of the square chip. Curve A was produced by a transducer construction having an attached cylindrical tube of dimensions inner diameter (I.D.) 1.250 mm, outer diameter (O.D.) 2.675 mm and length (L) 0.500 mm, curve B by a transducer having tube dimensions I.D. 1.250 mm, O.D. 2.675 mm and L 2.500 mm, and curve C by a transducer having tube dimensions I.D. 1.250 mm, O.D. 3.775 mm and L 2.5 mm. In all three cases, the chip was of isotropic material and was a square of approximately 2.675 mm side length. Curve D was produced by a transducer having an attached cylindrical tube of dimensions I.D. 1.250 mm, O.D. 2.675 mm and L 2.5 mm; the chip in this latter case was of orthotropic material and was again a square of approximately 2.675 mm side length.

We observed that for all constructions of the transducer analyzed, the radial and circumferential stresses were equal at an orientation angle, $\theta$, of approximately 22.5°. This orientation angle was the angle that the longitudinal axes of the sensors made with the linear edges of the chip. In addition, by making this orientation angle correspond to the angle which a {110} crystal direction of the chip makes with the edges of the chip, the change in resistance of the sensors will be proportional to the difference between radial and tangential stresses.

An embodiment of the present invention, employing the principle demonstrated in Figure 2 is illustrated in Figures 3 and 4. The semiconductor pressure transducer of Figures 3 and 4 comprises a square semiconductor chip 10 formed from a single crystal of semiconductor material, such as silicon. A pair of radial stress sensors 12 and 13 is disposed along an axis (P) passing through the centre of chip 10 making an angle ($\theta$) of approximately 22.5° with respect to one pair of edges of the chip. A pair of circumferential stress sensors 16 and 17 is disposed along and transverse to another axis (Q) at right angles to axis P passing through the centre of chip 10 and making an angle $\theta$ of approximately 22.5° with respect to the other two edges of the chip. This latter axis is also parallel to the {110} crystal direction of the chip. Each stress sensor makes an angle of 22.5° with respect to a corresponding one of the edges of chip 10.

Sensors 12, 13, 16 and 17 are formed integrally with chip 10 by injecting, such as by diffusion, an impurity, such as boron into the surface of chip 10 in surface regions defining the shape of such sensors. Sensors 12, 13, 16 and 17 exhibit a piezoresistive characteristic. Each sensor may be composed of a plurality of parallel strips of piezoresistive material connected in series, with the lengths of such strips being oriented parallel to the direction of the sensors shown in Figure 3.

A circular cavity shown generally by the reference numeral 21 in Figure 4, is formed in the surface of chip 10 opposite to the surface on which are disposed stress sensors 12, 13, 16 and 17. A cylindrical tube 23, shown in partial cross-section, is bonded to the surface of chip 10 opposite to the surface on which are disposed the stress sensors. Tube 23 may be formed from Pyrex, for example, and bonded to the surface of chip 10. Tube 23 is illustrated as surrounding cavity 21, the inner diameter of tube 23 may be greater or less than the diameter of cavity 21.

Accordingly, the transducer of Figures 3 and 4 provides for substantially equal stresses to be induced in radial and circumferential stress sensors 12, 13, 16 and 17, whereby zero shift due to changes in static pressure and changes in the temperature of the transducer is substantially eliminated. For many practical applications of the present transducer, the zero shift effect is effectively minimized for an orientation angle θ selected from the range between 15° and 30°.

## Claims

1. A semiconductor pressure transducer comprising a single crystal semiconductor chip (10) wherein said chip has substantially rectilinear edges and a circular cavity (21) formed in one surface of said chip to provide a diaphragm region; first and second pairs of sensors (12; 13; 16, 17) disposed circumferentially within the diaphragm region on the other surface of said chip and having a piezoresistive characteristic whereby the resistance of the sensors changes in response to stresses induced in the chip; said first pair (12, 13) sensing substantially radial stresses ($\sigma_r$) in said chip and said second pair (16, 17) sensing substantially circumferential stresses ($\sigma_c$) in said chip, characterized in that said chip has its {110} crystal direction t an oblique angle (θ) in the range of 15° to 30° to the one edge of the chip; and in that said circumferential pairs of sensors (12, 13; 16, 17) are disposed symmetrical with two orthogonal axes (Q, P) passing through the center of said chip, the one (Q) of said orthogonal axes being oriented parallel to the said {110} crystal direction.

2. Transducer according to claim 1, characterized in that said oblique angle (θ) is approximately 22.5°.

3. Transducer according to claims 1 or 2, characterized in that the chip is of square shape and a cylindrical tube (23) is bonded to the said one surface of the chip surrounding said cavity and being closed by the diaphragm region.

4. Transducer according to any one of the preceding claims, characterized in that the four stress sensors (12, 13, 16 and 17) of the two pairs are electrically connected in the form of a constant current Wheatstone bridge circuit.

## Patentansprüche

1. Halbleiter-Druckumwandler bestehend aus einem Einkristall-Halbleiterchip (10), wobei dieses Chip im wesentlichen geradlinige Kanten aufweist, und in einer Oberfläche des Chips ein kreisförmiger Hohlraum (21) ausgebildet ist, um dort eine Membran zone vorzusehen; mit ersten und zweiten Paaren von Sensoren (12, 13; 16, 17), die innerhalb der Membranzone auf der anderen Oberfläche des Chips kreisförmig verteilt angeordnet sind und die eine piezoelektrische Widerstandskennlinie aufweisen, wobei der Widerstandswert der Sensoren sich in Abhängigkeit von Deformationsspannungen ändert, die auf das Chip einwirken; wobei das erste Sensorenpaar (12, 13) im wesentlichen radiale, in dem Chip auftretende Spannungen ($\sigma_r$) und das zweite Sensorenpaar (16, 17) im wesentlichen, in dem Chip auftretende Umfangsspannungen ($\sigma_c$) abfühlt, dadurch gekennzeichnet, daß in dem genannten Chip die {110} Kristallrichtung unter einem schrägen Winkel (θ) in der Größenordnung von 15° bis 30° zu der einen Kante des Chips verläuft; daß die kreisförmig verteilten Sensorenpaare (12, 13; 16, 17) symmetrisch zu zwei orthogonalen Achsen (Q, P), die durch den Chipmittelpunkt laufen, angeordnet sind, wobei eine der genannten orthogonalen Achsen (Q) parallel zu der genannten {110} Kristallrichtung ausgerichtet ist.

2. Druckumwandler nach Anspruch 1, dadurch gekennzeichnet, daß der genannte schräge Winkel (θ) annähernd 22,5° beträgt.

3. Druckumwandler nach Anspruch 1 oder 2, dadurch gekennzeichnet, daß das Chip von quadratischer Form ist und daß ein zylindrisches Rohr (23) mit der genannten einen Oberfläche des Chips dicht verbunden ist, den genannten Hohlraum umgibt und von der Membranzone abgeschlossen ist.

4. Druckumwandler nach einem der vorhergehenden Ansprüche, dadurch gekennzeichnet, daß die vier Spannungssensoren (12, 13, 16, 17) der genannten zwei Sensorenpaare miteinander in der Form einer Konstantstrom-Wheatstoneschen Brückenschaltung elektrisch verbunden sind.

## Revendications

1. Transducteur de pression à semiconducteur comprenant une puce semiconductrice monocristalline (10) dans lequel ladite puce a des bords sensiblement rectilignes et une cavité circulaire (21) formée dans une surface de la puce pour fournir une région de diaphragme; des première et seconde paires de détecteurs (12, 13; 16, 17) disposées selon la circonférence dans la région de diaphragme sur l'autre surface de la puce et ayant une caractéristique piézorésistive, d'où il résulte que la résistance des détecteurs change en réponse aux contraintes induites dans la puce; la première paire (12, 13) détectant les contraintes sensiblement radiales ($\sigma_r$) dans la puce et la seconde paire (16, 17) détectant les contraintes sensiblement tangentielles ($\sigma_c$) dans la puce, caractérisé en ce que la puce a sa direction cristalline {1,1,0} un angle oblique ($\theta$) dans la gamme de 15° à 30° par rapport à un bord de la puce; et en ce que les paires de détecteurs disposées selon une circonférence (12, 13; 16, 17) sont disposées symétriquement par rapport à deux axes orthogonaux (Q, P) passant par le centre de la puce, le premier (Q) de ces axes orthogonaux étant orienté parallèlement à la direction cristalline {1,1,0}.

2. Transducteur selon la revendication 1, caractérisé en ce que l'angle oblique ($\theta$) est approximativement égal à 22°5.

3. Transducteur selon l'une des revendications 1 ou 2, caractérisé en ce que la puce est de forme carrée et en ce qu'un tube cylindrique (23) est lié à la première surface de la puce entourant la cavité et fermé par la région de diaphragme.

4. Transducteur selon l'une quelconque des revendications précédentes, caractérisé en ce que les quatre détecteurs de contraintes (12, 13, 16, 17) des deux paires sont électriquement connectés sous forme d'un circuit en pont de Wheatstone à courant constant.

0 109 992

FIG.1

FIG.2

1

FIG. 3

FIG. 4

2